Europäisches Patentamt

European Patent Office

Office européen des brevets

(11) Numéro de publication : **0 168 323**
**B1**

(12) **FASCICULE DE BREVET EUROPÉEN**

(45) Date de publication du fascicule du brevet :
02.12.87

(51) Int. Cl.⁴ : **B 60 G 17/04**, B 60 G 15/12

(21) Numéro de dépôt : 85401384.4

(22) Date de dépôt : 09.07.85

(54) **Suspension pour véhicule.**

(30) Priorité : 09.07.84 FR 8410859

(43) Date de publication de la demande :
15.01.86 Bulletin 86/03

(45) Mention de la délivrance du brevet :
02.12.87 Bulletin 87/49

(84) Etats contractants désignés :
DE GB IT

(56) Documents cités :
EP-A- 0 045 269
DE-A- 2 038 744
FR-A- 1 591 512
FR-A- 2 098 654
FR-A- 2 141 291
FR-A- 2 252 508

(73) Titulaire : **LUCAS FRANCE S.A. Division MESSIER AUTO INDUSTRIE**
**6, rue du Moulin par le Bas Champian-B.P. 137**
**F-91163 Longjumeau Cédex (FR)**

(72) Inventeur : **Toussaint, Michel**
**71, rue du Pavé Blanc**
**F-92140 Clamart (FR)**
Inventeur : **Chauveau, Jean-Marc**
**50, rue du Docteur Darin**
**F-92370 Chaville (FR)**

(74) Mandataire : **Martin, Jean-Jacques et al**
**Cabinet REGIMBEAU 26, Avenue Kléber**
**F-75116 Paris (FR)**

## Description

La présente invention concerne les suspensions pour véhicules, et plus particulièrement les suspensions à correction de garde au sol que l'on trouve couramment sur les véhicules tout terrain ou blindés.

Une suspension de véhicule avec correction de garde au sol comprend de façon générale des moyens de piston coulissant dans un cylindre en coopération avec un fluide ayant une certaine viscosité et des moyens de laminage, des moyens de ressort couplés aux moyens de piston pour exercer les forces de rappels nécessaires au rétablissement de la position d'équilibre des moyens de piston par rapport au cylindre, et donc au châssis du véhicule sous le poids de ce châssis.

Quand la suspension est à correction de garde au sol, les moyens de ressort sont couplés généralement aux moyens de piston par un volume de fluide incompressible dont il est possible de faire varier le volume en fonction de la valeur de la garde au sol désirée.

Plus précisément, l'ensemble des moyens de couplage entre les moyens de ressort et les moyens de piston comprend, dans une chambre cylindrique, un volume de gaz compressible délimité par un premier piston séparateur séparant le volume de gaz d'un volume de fluide incompressible, ce volume pouvant être modulé à volonté par injection ou pompage du fluide, un second piston séparateur pour fermer le volume de fluide incompressible, et une tige ou des tiges de liaison entre ce deuxième piston séparateur et les moyens de piston coopérant avec les moyens de laminage.

Ces suspensions décrites succinctement ci-dessus fonctionnent de façon identique à celles qui ne sont pas à correction de garde au sol pour absorber et amortir les chocs. Par contre, elles ont une fonction de plus : celle de pouvoir modifier la garde au sol d'un véhicule, c'est-à-dire de pouvoir, dans certaines limites, faire varier la distance entre le fond du châssis du véhicule et le sol sur lequel est posé le véhicule.

Il y a deux possibilités pour un changement de garde au sol :

Quand le véhicule est statique, c'est-à-dire quand il ne se déplace pas, et quand il se déplace, et donc quand il peut être soumis à des chocs de roulement.

Quand le véhicule est statique, la modification de la garde au sol ne pose pas de problème car la suspension est en équilibre et la pression d'alimentation en fluide, pour par exemple augmenter le volume de la chambre de fluide incompressible, n'a pas besoin d'atteindre des valeurs considérables puisqu'elle n'a qu'à compenser la pression statique sur la suspension.

Par contre, quand le véhicule roule, la correction de la garde au sol pose un problème. En effet, même lorsque le véhicule se déplace, la garde au sol ne peut être corrigée que par injection ou le pompage de fluide incompressible.

Hors, si à ce même instant le véhicule est soumis à un choc, la pression dynamique à laquelle est soumise la suspension peut atteindre des valeurs considérables, et surtout très supérieures à la pression que peut généralement fournir la pompe d'alimentation en fluide qui injecte le fluide dans ces volumes pour les faire augmenter. La conséquence est évidente : le résultat obtenu est l'inverse du but recherché. En effet, sous l'effet de cette forte augmentation de pression due au choc qui provoque lui-même une diminution de volume du fluide, le fluide qui se trouvait déjà dans le volume est refoulé vers la pompe, le volume de fluide diminue fortement, et donc le véhicule s'affaisse, ce qui est un incontestable inconvéninent, le châssis du véhicule pouvant aller jusqu'à toucher le sol et s'endommager : il n'est pas ainsi possible de commander un changement de garde au sol lorsque le véhicule se déplace.

La présente invention a pour but de pallier ces inconvénients, et ainsi de réaliser une suspension de véhicule avec possibilité de correction de garde au sol quand le véhicule qui comporterait cette suspension est au repos, mais aussi quand il est en mouvement sur un sol de quelque nature que ce soit.

Plus précisément, la présente invention a pour objet une suspension de véhicule à correction de garde au sol comportant :

un cylindre apte à contenir un fluide visqueux,

des moyens de piston coulissant dans ledit cylindre,

des moyens de laminage dudit fluide associés auxdits moyens de piston,

un corps creux définissant un logement dans lequel est formée une première chambre de fluide compressible étanche délimitée, en partie au moins, par un premier piston séparateur coulissant dans ledit logement,

un deuxième piston séparateur coulissant dans ledit logement et formant avec ledit premier piston séparateur une deuxième chambre apte à contenir un fluide non compressible,

des moyens d'alimentation en fluide de ladite deuxième chambre,

des moyens de liaison de couplage dudit second piston séparateur avec lesdits moyens de piston, et caractérisée par des moyens pour obturer lesdits moyens d'alimentation de ladite deuxième chambre en fonction de la position dudit premier piston séparateur dans ledit logement.

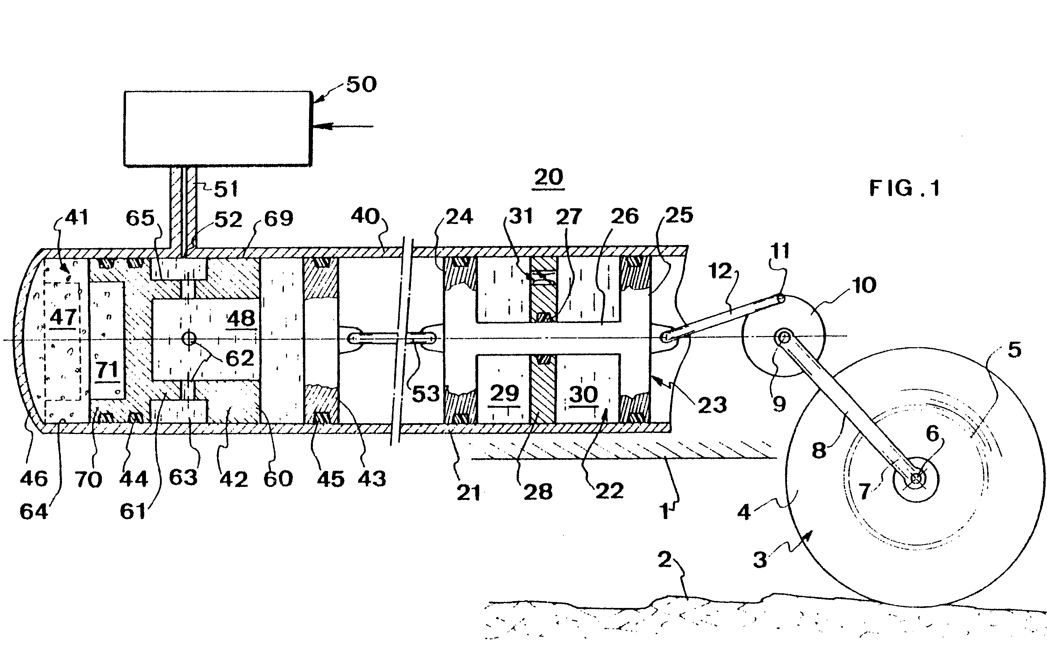

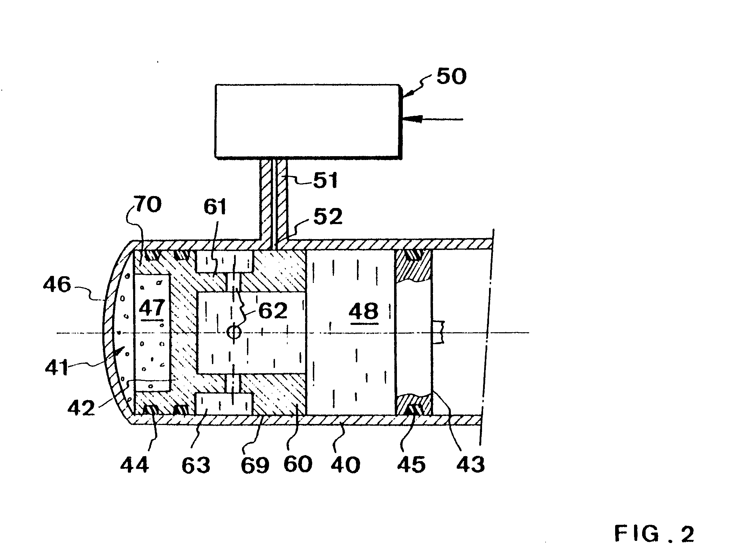

D'autres caractéristiques et avantages de la présente invention apparaîtront au cours de la description suivante donnée en regard des dessins annexés à titre illustratif mais non limitatif, dans lesquels la figure 1 représente sous forme schématique un mode de réalisation d'une suspension selon la présente invention, et la figure 2 représente une partie de la suspension selon la figure 1 permettant de comprendre son fonctionnement et ses avantages dans des conditions particulières.

La figure 1 représente donc, sous forme schématique, un mode de réalisation particulier d'une suspension à correction de garde au sol selon l'invention. Ce genre de suspension est destiné à être monté sur un châssis 1 de véhicule, schématiquement évoqué, ce véhicule pouvant être, par exemple, un camion, un engin tout terrain, ou même un engin chenillé. Dans l'exemple illustré, le châssis 1 du véhicule coopère avec le sol 2 par des moyens de roulement 3 comprenant, par exemple, un pneumatique 4 monté sur une jante 5. Cette roue 3 est montée sur un axe 6 situé à l'extrémité 7 d'un balancier 8 apte à pivoter autour d'un axe 9 solidaire du châssis 1. Sur cet axe 9 pivotant, est associée une came 10 comportant un axe d'accrochage 11 non confondu avec l'axe 9.

A ces moyens de roulement 3..., est associée une suspension 20. Cette suspension comprend, dans le mode illustré, un cylindre 21 apte à contenir un fluide visqueux 22. Elle comporte aussi, dans ce cylindre, des moyens de piston 23 montés coulissant dans ledit cylindre 21 de façon étanche. Dans ce mode de réalisation, ces moyens de piston 23 sont constitués par deux têtes 24 et 25 reliées entre elles par une tige 26 passant par une traversée étanche 27 réalisée dans une paroi médiane 28 solidaire du cylindre 21. De ce fait, entre les deux têtes 24 et 25 du piston, la paroi médiane 28 et la tige de liaison 26 sont définies deux chambres 29 et 30 à volumes variant inversement proportionnellement quand les moyens de piston 23 se déplacent dans le cylindre 21. Pour que cela soit possible, ces deux chambres 29 et 30 communiquent entre elles à travers des moyens de laminage 31 du fluide 22 contenu dans ces deux chambres. Ces moyens de laminage 31 ont été très schématiquement représentés car ils sont connus en eux-mêmes, et notamment dans ce type de suspension.

La suspension comporte en plus, pour obtenir une correction de la garde au sol, un corps 40 creux délimitant un logement cylindrique 41. Dans ce logement 41, sont disposés respectivement un premier piston séparateur 42 et un second piston séparateur 43 aptes à coulisser de façon étanche dans ce logement 41, par exemple au moyen de joints d'étanchéité respectivement 44 et 45. Ces deux pistons séparateurs 42 et 43 délimitant, avec le fond 46 du logement 41, un premier 47 et second 48 volumes dont les valeurs respectives varient en fonction des positions respectives des deux pistons séparateurs. Plus précisément, le volume 47 est apte à contenir un fluide compressible élastique, un gaz par exemple, tandis que le second volume 48 comporte un fluide incompressible, de l'huile par exemple.

Dans une application à un changement de garde au sol, la suspension comporte des moyens 50 permettant de faire varier la valeur du volume 48 par injection ou pompage du fluide incompressible. Ces moyens 50 sont généralement constitués par une pompe hydraulique éventuellement associée à une bâche de réserve hydraulique et, bien entendu, d'un conduit 51 reliant la sortie de la pompe au volume 48, ce conduit 51 débouchant dans le volume 48 par un orifice 52, la position de cet orifice étant déterminée pour obtenir les fonctions qui seront définies ci-après.

Enfin, le second piston séparateur 43 est lié aux moyens de piston 23 de telle façon que les mouvements de ces moyens de piston soient recopiés de façon directe ou indirecte par le piston séparateur 43. Il est à préciser que, dans l'exemple illustré, les moyens de liaison entre le second piston séparateur et les moyens de piston sont constitués par une biellette 53. De plus, il pourrait être envisagé, pour certaines applications, que le corps 40 soit un prolongement du cylindre 21 et que le second piston séparateur soit constitué par une face d'une des deux têtes 24 ou 25 des moyens de piston 23.

Comme il sera explicité ci-après, pour pouvoir changer la garde du châssis 1 par rapport au sol 2, on commande l'alimentation, par injection ou pompage, du volume d'huile 48. Cependant, pour éviter des incidents tels que mentionnés ci-avant, la suspension comporte des moyens pour obturer, dans cet exemple de réalisation, l'orifice 52 débouchant dans le volume 48 quand le piston séparateur 42 occupe une position prédéterminée rendant le volume 47 minimal, c'est-à-dire, quand il contient un gaz, la pression de ce gaz étant maximale. Dans l'exemple illustré, ces moyens sont constitués par un piston auxiliaire 60 coulissant dans le logement 41 entre les deux pistons séparateurs, c'est-à-dire dans le volume 48 de fluide incompressible. Ce piston auxiliaire 60 est relié rigidement par une entretoise 61 au premier piston séparateur 42 de telle façon que tout mouvement du piston séparateur 42 entraîne dans un même mouvement le piston auxiliaire 60. Dans ce mode de réalisation, l'entretoise 61 est constituée par une couronne annulaire d'une section extérieure à celle du logement 41 et comporte des orifices 62 de telle façon que l'espace 63 délimité entre le piston séparateur 42, le piston auxiliaire 60, la paroi intérieure 64 du logement 41 et la paroi extérieure 65 de cette couronne 61 fasse partie du volume 48, et donc, contienne aussi du fluide incompressible.

La longueur de cette entretoise 61 est déterminée de telle façon que, dans des conditions normales d'utilisation, l'orifice 52 d'alimentation en fluide débouche dans cet espace 63 et que le fluide arrivant ou partant par cet orifice puisse interagir avec l'ensemble du volume 48, notamment à travers les orifices 62.

Enfin, il est bien précisé que la longueur de la partie de la surface 69 cylindrique du piston auxiliaire qui glisse sur la paroi intérieure du logement 41 est suffisante pour que, lorsque celle-ci commence à obturer l'orifice 52, elle continue à l'obturer au moins jusqu'à ce que le piston séparateur 42 vienne en butée contre un arrêt définissant une position limite de celui-ci, et donc une limite inférieure du volume de gaz 47. Cette butée peut être le fond 46 du logement 41 et la partie du piston séparateur qui coopère avec cette butée, comme représenté en pointillés sur la figure 1, peut être, comme illustré sur cette même figure, une couronne en saillie 70, le volume inférieur limite étant défini par le volume 71 délimité à l'intérieur de cette couronne 70.

Bien entendu, l'ensemble de ces éléments cylindriques est choisi de préférence de forme cylindrique de révolution pour que, d'une part ils soient plus faciles à réaliser, et que d'autre part, quelles que soient leurs positions angulaires respectives les uns par rapport aux autres, ils puissent réaliser les fonctions mentionnées ci-dessus.

La suspension à correction de garde au sol décrite structurellement ci-dessus fonctionne de la façon suivante.

Il est tout d'abord précisé que, si le véhicule est statique, c'est-à-dire s'il ne roule pas sur le sol 2, les moyens de piston 23 prennent une position d'équilibre sous l'action des deux forces antagonistes, l'une donnée par le poids du véhicule et transmise par la roue, le balancier 8, la came 10 et la manivelle 12, et l'autre donnée par le gaz sous pression contenu dans le volume 47 jouant le rôle d'un ressort et transmise par le premier piston séparateur 42, le volume de fluide incompressible 48, le second piston séparateur 43 et la biellette 53. De ce fait, la garde au sol du véhicule, distance séparant le châssis 1 du sol 2, est déterminée.

Si, dans cette position statique, on désire modifier la garde au sol du véhicule, en affaissant celui-ci par exemple, on commande les moyens d'alimentation du volume 48 pour aspirer une partie de l'huile qu'il contient, ce qui entraîne, uniquement dans le corps 40, un déplacement vers la gauche (dans l'exemple illustré) du second piston séparateur 43, ceci sous l'action du poids du véhicule. Il est à noter que le poids du véhicule ne changeant pas, le volume de gaz 47 ne change pas. Dans ce déplacement, les moyens de piston 23 se déplacent de la même façon et entraînent, par traction sur la manivelle 12, une rotation senestrorsum de la came 10 et du balancier 8, ce qui fait que le châssis 1 se rapproche du sol 2 puisque la roue 3 a tendance, en relativité, à s'éloigner du sol 2.

Bien entendu, l'effet contraire se produirait (augmentation de la garde au sol) en augmentant le volume 48 du fluide incompressible.

Si maintenant on suppose que le véhicule se déplace, lorsque les moyens de roulement subissent des chocs, le balancier 8 peut subir des rotations, suivant la nature des aspérités rencontrées, senestrorsum ou dextrorsum, entraînant des déplacements dans un sens ou dans l'autre des moyens de piston 23 en faisant varier le volume des chambres 29 et 30 et en produisant un amortissement par laminage du fluide transféré d'une chambre dans l'autre à travers les moyens de laminage 31, la fonction ressort étant donnée par le gaz sous pression dans le volume 47. Dans ces conditions, la suspension fonctionne de façon classique et comme les autres types de suspension.

Enfin, si, pendant que le véhicule se déplace, on choisit de modifier la garde au sol, il est possible de l'obtenir en modulant la valeur du volume du fluide 48.

Cependant, comme précisé précédemment, les pressions que peuvent fournir les pompes hydrauliques sont relativement faibles et, en tout état de cause, nettement inférieures aux pressions obtenues dans les chambres de gaz de suspensions. Si donc, lors d'un choc, il était procédé à l'injection de fluide, pour éviter qu'à partir d'une certaine pression on obtienne un effet inverse, c'est-à-dire un refoulement du fluide lorsque le premier piston séparateur 42 se déplace en tendant à réduire le volume 47 et lorsqu'il a atteint une position correspondant à une pression du gaz égale à la pression donnée par la pompe, le piston auxiliaire 60 obture l'orifice d'alimentation 52, comme illustré sur la figure 2, et empêche de ce fait le refoulement du fluide vers la pompe. Si la pression due au choc continue à augmenter, le piston séparateur 42 continue à se déplacer en entraînant le piston auxiliaire 60 qui a une longueur suffisante pour maintenir l'orifice 52 constamment obturé.

On voit donc qu'avec un tel système, si l'on ne peut pas augmenter la garde au sol au moment d'un choc des moyens de roulement 3 avec un accident du sol, au moins peut-on éviter l'affaissement du châssis en maintenant la garde au sol constante.

## Revendications

1. Suspension de véhicule à correction de garde au sol comportant un cylindre (21) apte à contenir un fluide visqueux, des moyens de piston (23) coulissant dans ledit cylindre, des moyens de laminage (31) dudit fluide associé auxdits moyens de piston, un corps creux (40) définissant un logement (41) dans lequel est formé un premier volume (47) de fluide compressible étanche délimité, en partie au moins, par un premier piston séparateur (42) coulissant dans ledit logement, un deuxième piston séparateur (43) coulissant dans ledit logement et formant avec ledit premier piston séparateur un deuxième volume (48) apte à contenir un fluide non compressible, des moyens (50, 51, 52) d'alimentation en fluide dudit deuxième volume, des moyens (53) de liaison de couplage dudit second piston séparateur (43) avec lesdits moyens de piston (23), caractérisée par le fait qu'elle comporte en outre des moyens (60, 61...) pour obturer lesdits moyens d'alimentation dudit deuxième volume en fonction de la position dudit premier piston séparateur (42) dans ledit logement 41.

2. Suspension selon la revendication 1, caractérisée par le fait que lesdits moyens (60, 61...) pour obturer lesdits moyens d'alimentation dudit deuxième volume (48) sont constitués par un piston auxiliaire (60) apte à coulisser par glissement contre la paroi dudit logement (41) dans le volume du fluide incompressible et par des moyens d'attache (61) dudit piston auxiliaire audit premier piston séparateur de façon que ledit piston auxiliaire vienne obturer l'orifice (52) d'alimentation en fluide incompressible dudit volume (48) pour une position déterminée dudit piston séparateur (42).

3. Suspension selon la revendication 2, caractérisée par le fait que la longueur de la partie de la surface (69) du piston auxiliaire, et qui glisse en contact avec la paroi intérieure dudit logement (41), est au moins égale à la longueur de la fin de course possible du premier piston séparateur à partir de la position déterminée, dans le sens d'une réduction du volume de fluide compressible.

4. Suspension selon la revendication 2 ou 3, caractérisée par le fait que ledit piston auxiliaire (60) est en forme de couronne cylindrique.

## Claims

1. A vehicle suspension having ground clearance correction comprising a cylinder (21) adapted to contain a viscous fluid, piston means (23) sliding in said cylinder, means (31) associated with said piston means, for throttling of said fluid, a hollow body (40) defining a chamber (41) in which is formed a first sealed volume (47) of compressible fluid, delimited at least in part, by a first separator piston (42) sliding in said chamber, a second separator piston (43) sliding in said chamber and forming with said first separator piston a second chamber (48) adapted to contain a non-compressible fluid, means (50, 51, 52) for supplying fluid to said second chamber, connecting means (53) for coupling said second separator piston (43) to said piston means (23), characterised by the fact that it further includes means (60, 61...) for closing said means for supplying said second chamber as a function of the position of said first separator piston (42) in said chamber (41).

2. A suspension according to Claim 1, characterised by the fact that said means (60, 61) for closing said means for supplying said second chamber (48) is constituted by an auxiliary piston (60) adapted to perform a sliding movement against the wall of said chamber (41) within the volume of non-compressible fluid and by means (61) for connecting said auxiliary piston to said first separator piston in such a way that said auxiliary piston closes the orifice (52) supplying non-compressible fluid to said chamber (48) for a determined position of said separator piston (42).

3. A suspension according to Claim 2, characterised by the fact that the length of the portion of the surface (69) of the auxiliary piston which slides in contact with the internal wall of said chamber (41), is at least equal to the possible distance of the end of travel of the first separator piston from the determined position, in the direction of a reduction in the volume of compressible fluid.

4. A suspension according to Claim 2 or 3, characterised by the fact that said auxiliary piston (60) is in the shape of a cylindrical ring.

## Patentansprüche

1. Fahrzeugaufhängung mit Korrektur des Bodenabstandes, mit einem Zylinder (21), der geeignet ist, ein viskoses Fluid zu beinhalten, Kolbeneinrichtungen (23), die sich in dem genannten Zylinder hin- und herbewegen, Drosseleinrichtungen (31) des genannten Fluids, die mit den genannten Kolbeneinrichtungen verbunden sind, einem Hohlkörper (40), der einen Raum (41) bestimmt, in welchem ein erstes Volumen (47) aus kompressiblem Fluid gebildet ist, welches zumindest teilweise durch einen ersten Trennkolben (42), der sich in dem genannten Raum hin- und herbewegt, dicht begrenzt wird einen zweiten Trennkolben (43), der sich in dem genannten Raum hin- und herbewegt und der mit dem genannten ersten Trennkolben ein zweites Volumen (48) bildet, das geeignet ist, ein nicht kompressibles Fluid zu beinhalten, Fluidzufuhreinrichtungen (50, 51, 52) des genannten zweiten Volumens, Kopplungsverbindungseinrichtungen (53) des genannten zweiten Trennkolbens (43) mit den genannten Kolbeneinrichtungen (23), dadurch gekennzeichnet, daß sie außerdem Einrichtungen (60, 61...) umfaßt, um die genannten Zufuhreinrichtungen des genannten zweiten Volumens in Abhängigkeit von der Position des genannten ersten Trennkolbens (42) in dem genannten Raum (41) zu schließen.

2. Aufhängung nach Anspruch 1, dadurch gekennzeichnet, daß die genannten Einrichtungen (60, 61...), zum Schließen der genannten Zufuhreinrichtungen des genannten zweiten Volumens (48), aus einem Hilfskolben (60), der sich in dem Volumen des inkompressiblen Fluids gegen die Wand des genannten Raumes (41) gleitend hin- und herbewegen kann, und aus Einrichtungen (61) zur Befestigung des genannten Hilfskolbens am ersten genannten Trennkolben bestehen, so daß der genannte Hilfskolben gerade die Öffnung (52) des genannten Volumens (48) zum Zuführen von inkompressiblem Fluid für eine bestimmte Position des genannten Trennkolbens (42) verschließt.

3. Aufhängung nach Anspruch 2, dadurch gekennzeichnet, daß die Länge des Teiles der Oberfläche (69) des Hilfskolbens, die in Kontakt mit der inneren Wand des genannten Raumes (41) gleitet, zumindest gleich der Länge des möglichen Wegendes des ersten Trennkolbens ab der bestimmten Position, in Richtung einer Reduzierung des Volumens von kompressiblem Fluid, ist.

4. Aufhängung nach Anspruch 2 oder 3, dadurch gekennzeichnet, daß der genannte Hilfskolben (60) die Form eines zylindrischen Rings hat.

FIG.1

FIG . 2